Europäisches Patentamt

European Patent Office

Office européen des brevets

(19)

(11) Numéro de publication: **0 031 618**
A2

## (12) DEMANDE DE BREVET EUROPEEN

(21) Numéro de dépôt: 80201202.1

(22) Date de dépôt: 16.12.80

(51) Int. Cl.³: **G 05 B 19/18**

(30) Priorité: 27.12.79 CH 11456/79

(43) Date de publication de la demande: 08.07.81
Bulletin 81/27

(84) Etats contractants désignés: **AT BE DE FR GB IT LU NL SE**

(71) Demandeur: **Maurer, Roger, Rue du 11 Novembre, F-74460 Marnaz (FR)**

(72) Inventeur: **Maurer, Roger, Rue du 11 Novembre, F-74460 Marnaz (FR)**

(74) Mandataire: **Meylan, Robert Maurice, c/o Bugnion SA Conseils en Propriété Industrielle 10, Route de Florissant Case 42, CH-1211 Geneve 2 (CH)**

(54) **Installation de plusieurs machines-outils à commande numérique.**

(57) Installation à commande numérique permettant de contrôler N machines-outils comportant chacune $\underline{n}$ moteurs à contrôler selon un programme indépendant désiré. Le dispositif de contrôle unique (C) comporte une station d'entrée des données (1), un mini-ordinateur (2), un équipement interface (8) composé de N unités interfaces (8A à 8N) lié par une barre omnibus (7) au mini-ordinateur. Chaque unité (8A à 8N) est attribuée à une machine-outil (9A à 9N) et comprend un circuit d'interface (10) à 2n bits ayant $\underline{n}$ sections (10a à 10n) pour contrôler chacun des n moteurs (12a à 12n) d'une machine. Chaque section (10a à 10n) est étendue par un circuit intégré de contrôle (11a à 11n) attribué à chaque moteur pour toutes les fonctions de comparaison.

- 1 -

## Installation de plusieurs machines-outils à commande numérique.

La présente invention a pour objet une installation comportant N machines-outils commandées numériquement par un calculateur commun à toutes les machines-outils, chaque machine ayant un nombre n de moteurs à contrôler et à commander, l'installation comportant en outre une station d'entrée des données et des programmes, des moyens de contrôle pour commander chaque machine selon un programme indépendant désiré et N unités interfaces liées par au moins une barre omnibus au calculateur, chaque unité étant attribuée et adaptée à une des machines-outils et comprenant n sections pour le contrôle de chacun des n moteurs d'une machine-outil.

Dans le domaine des machines-outils on a réalisé jusqu'à maintenant des commandes numériques adaptables sur une seule machine à la fois. Chaque machine a donc sa propre commande numérique, constituée par un automate comprenant un calculateur numérique et une unité de contrôle et avec un programme fixe. Avec ce genre de dispositif on ne peut pas, en général, contrôler et faire fonctionner plus de deux axes simultanément, donc il ne permet pas de réaliser plus de deux opérations simultanément. Le prix de revient de telles machines est donc relativement élevé puisqu'elles comportent chacune leur propre automate.

De telles machines-outils sont connues et décrites par exemple, dans les brevets américain No.4 124 887 et français No.2 228 247, selon lesquels on trouve, incorporé dans chaque machine-outil, un ordinateur qui leur est propre, respectivement leur propre lecteur de bande, qui commande cette machine et dans lesquels seul le contrôle est effectué par un ordinateur centralisé.

Depuis la vingtaine d'année que ces commandes numériques ont été développées leur rendement a bien été amélioré, surtout depuis ces dernières années où l'on a introduit comme commande numérique des micro-processeurs, mais la philosophie générale de ces machines est toujours restée limitée à la conception de machines-outils unitaires ayant chacune son propre automate. Donc, dans un atelier équipé de plusieurs machines-outils, par exemple 20 machines, chacune de ces machines a son propre automate, ce qui nécessite la présence de plusieurs ouvriers qualifiés. De plus, les machines actuelles avec leur automate coûtant très cher malgré les progrès réalisés avec les micro-processeurs, elles sont généralement réservées, afin d'avoir un rendement suffisant, à la fabrication de pièces de très haute qualité, donc pour des séries limitées, et il n'est en principe pas rentable de les employer pour la fabrication des grandes séries.

Jusqu'à maintenant, on n'a jamais eu l'idée de centraliser toutes les commandes numériques dans un seul ordinateur, malgré le fait qu'il existe actuellement un besoin d'une telle rationalisation, comme indiqué plus haut. On peut imputer les raisons de cette lacune d'une part au fait que le milieu des machines-outils est un milieu conventionnel assez fermé ayant peu de relations avec le milieu de l'électronique et d'autre part qu'on a cru devoir surmonter de nombreuses difficultés de réalisation.

A première vue, on pouvait imaginer qu'avec l'arrivée des micro-processeurs sur le marché, ces micro-processeurs se prêteraient à une telle centralisation du contrôle. Malheureusement ceci n'est pas possible et si quelqu'un a essayé d'appliquer les micro-processeurs à une telle réalisation, il se sera sûrement heurté à de grandes difficultés car, en raison de leur configuration, les micro-processeurs ne se prêtent pas à la réalisation d'une telle centralisation.

Le but de la présente invention est de concevoir une installation rentable offrant en outre de nombreuses autres possibilités ainsi qu'une fabrication en grande série à faible prix de revient.

A cet effet, l'installation selon l'invention est caractérisée en ce que ledit calculateur est un mini-ordinateur opérant en temps réel qui forme avec la station d'entrée un seul dispositif centralisé pour commander simultanément toutes les N machines-outils et tous les n moteurs de chaque machine-outil, ce mini-ordinateur étant adapté à transmettre toutes les commandes de travail et les signaux de contrôle respectivement d'état, et dans ce but, est équipé d'un système d'interruption ayant un temps de changement de contexte maximum de 900 ns et un temps de cycle qui est seulement une fraction du temps de changement de contexte, au maximum les 1/5, et comprend une mémoire centrale comme mémoire de travail, le cas échéant complétée par une mémoire de travail extérieure pour mémoriser tous les programmes de travail à exécuter, en ce que chaque circuit d'interface qui comprend lesdites n sections est un circuit à au moins 2n bits, et en ce que pour décharger le mini-ordinateur de la fonction du contrôle individuel des moteurs, il est prévu, connecté à la sortie de chacune desdites sections un circuit intégré de contrôle attribué et adapté à chaque moteur pour toutes les fonctions de comparaison et d'état et piloté directement par ledit mini-ordinateur, toutes les lignes d'identification de chacune desdites sections étant reliées par une ligne commune d'identification.

On a donc reconnu qu'il fallait employer un mini-ordinateur du type mentionné, qui est le seul capable de remplir les fonctions complexes, et non seulement des micro-processeurs.

Ce qui s'est révélé essentiel pour trouver une solution au problème posé, a été le choix du temps de changement de contexte de 900 ns maximum et le temps de cycle de seulement 1/5 du temps de changement de contexte, donc environ 180 ns. Ces conditions sont en effet absolument nécessaires pour arriver à une rationalisation du travail pour que la commande et le contrôle puissent être réalisés pratiquement simultanément. A titre d'exemple, il faut tenir compte que l'exécution d'une opération individuelle par le moteur d'une machine nécessite un temps d'environ 15 ms qui se décompose en environ 9 à 11 ms pour le déplacement physique du moteur, respectivement de l'outil, et 6 à 4 ms pour le traitement des données dans le mini-ordinateur. Avec l'installation selon l'invention, pour effectuer huit opérations différentes pratiquement simultanément, il faut avoir un temps de cycle maximum de 180 ns.

L'état de la technique connu jusqu'à maintenant ne donnait aucune indication pour arriver à ce but, car dans le brevet US No.4 124 887 on trouve l'indication que le temps de cycle peut varier entre 0,5 et 10 ms.

En règle générale dans les installations connues où un ordinateur commande une seule machine, on trouve typiquement comme temps de changement de cycle, environ 700 ns et comme temps de changement de contexte 30 $\mu$s.

En outre, un point important pour la réalisation de cette invention a été de trouver que l'unité de contrôle qui était jusqu'alors incorporée dans chaque automate de chaque machine, ne soit pas incorporée dans le mini-ordinateur mais plutôt en tant que circuit intégré, respectivement chip, prévu entre chaque équipement interface et chaque moteur d'une machine-outil.

Cette installation présente de nombreux avantages : tout d'abord sur le plan financier : en considérant qu'une machine classique à cames coûte environ 80.000 Frs, et qu'une machine à commande numérique, offrant les mêmes possibilités en ce qui concerne les pièces à usiner coûte environ 200.000 Frs, les pièces fabriquées avec cette deuxième machine pour des séries identiques ont un prix de revient trop élevé par rapport à celui obtenu avec les machines à cames conventionnelles. Donc en supprimant les calculateurs numériques associés habituellement à chaque machine-outil et en utilisant une commande numérique unique, dont le coût est d'environ 80.000 Frs, pour plusieurs machines, dont le coût unitaire est ramené à environ 120.000 Frs, on réalise aisément que plus on augmente le nombre de machines commandées par la même unité, plus on diminue leur prix de revient et par conséquent plus on rentabilise l'installation.

Avec une telle installation, la programmation, le contrôle et la sécurité sont exécutés à partir d'une console unique par un seul employé. Les possibilités de stockage sur disque souple et/ou sur disque dur (couramment appelé de masse) de X programmes sont illimitées.

De plus, les créations, les modifications en temps réel sont visualisées et l'on supprime la bande perforée classique.

Avec une telle installation, il est possible de commander simultanément par exemple jusqu'à 64 machines avec par exemple 8 opérations simultanées par machine, ce nombre n'étant bien entendu pas limitatif, en fonction des nouvelles techniques à venir.

Par ce contrôle unique, centralisé on peut assurer simultanément outre la commande et le fonctionnement, également la sécurité, la gestion simultanée des planings de fabrication, les programmes de gestion, de fabrication et d'approvisionnement et même éventuellement la formation, l'enseignement par simulation, donc sans coûts annexes, ni risques, mais dans des conditions identiques à la réalité.

Le dessin annexé représente, à titre d'exemple, un schéma de réalisation de l'installation selon l'invention.

La figure 1 est un schéma bloc de l'installation générale.

La figure 2 est un exemple de réalisation d'une seule unité interface 8A.

La figure 3 représente le schéma général d'un circuit intégré de contrôle des moteurs.

La figure 4 représente le schéma fonctionnel de la partie micro-ordinateur de la figure 3.

L'installation comprend un dispositif de commande centralisée C comportant une station d'entrée 1 des données et des programmes de travail, un mini-ordinateur 2 avec une fonction temps réel et un système d'interruption, et une mémoire de travail 5 formée, en complément, par des disques souples remplaçables qui portent les programmes de travail désirés pour les machines. La station d'entrée 1 est équipée d'un pupitre de commande, d'un écran et d'une imprimante offrant la possibilité de traiter des données de gestion. Le mini-ordinateur 2 dont les principaux éléments sont une mémoire centrale 3 et une unité de contrôle centrale 4 est choisi de manière à avoir un temps de cycle de 180 ns et un temps de changement de contexte de 900 ns.

Le mini-ordinateur 2 est destiné à commander simultanément N machines-outils, le nombre de machines pouvant varier de 1 à 64, nombre prévu dans l'exemple considéré, chaque machine ayant elle-même $n$ moteurs, le nombre de moteurs par machine étant 8 dans l'exemple considéré.

Il est prévu un second mini-ordinateur de réserve 2' comprenant les mêmes éléments 3', 4' que le mini-ordinateur 2 et une mémoire identique 5' pour des raisons de sécurité en cas de mauvais fonctionnement du premier mini-ordinateur 2. Ce second mini-ordinateur et la mémoire fonctionnent, d'une manière connue en soi, en synchronisme avec le premier afin que les deux unités puissent se substituer l'une à l'autre. Les deux mini-ordinateurs 2,2' sont reliés au bus de transmission ou barre omnibus 7, par un commutateur de bus automatique 6 qui permet la commutation automatique de l'un ou de l'autre mini-ordinateur à ce bus 7.

La transmission des informations provenant du dispositif de commande C est effectuée par l'intermédiaire de ce bus 7 ou barre omnibus, à un équipement interface 8 ayant N unités interfaces 8A à 8N. Chaque unité interface 8A à 8N est attribuée et adaptée à un même nombre de machines-outils 9A à 9N. Cet ensemble de machines-outils pouvant être plusieurs machines-outils mono ou multi-broches avec poupée fixe ou mobile et plusieurs outils.

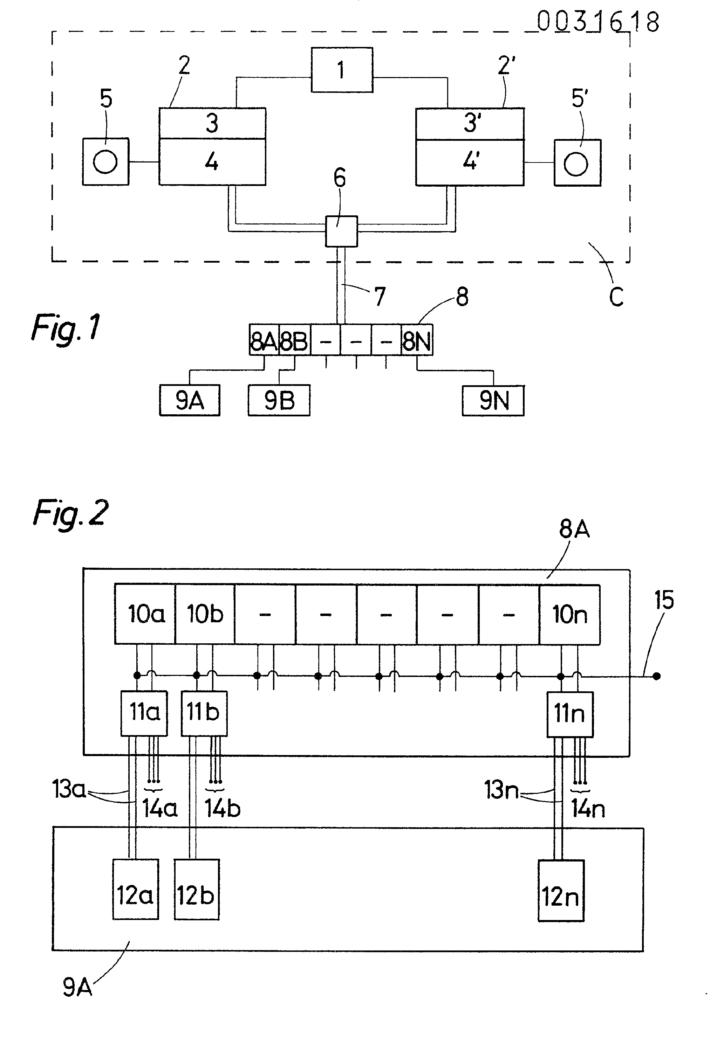

En se référant à la figure 2, on va décrire maintenant un exemple de réalisation d'une unité interface 8A. Cette unité comprend un circuit interface standard 10 de 16 bits, disponible dans le commerce, ayant $n$ sections d'interfaces 10a à 10n formées par un chip ou circuit intégré, le nombre n mentionné correspondant au nombre de moteurs à contrôler, respectivement au nombre de broches à commander pour une machine. Dans l'exemple considéré, il est prévu huit sections d'interface.

Chaque section d'interface 10a à 10n a deux sorties connectées à un circuit intégré de contrôle 11a à 11n, constitué par un chip de contrôle, chacun d'entre eux étant attribué à un des moteurs 12a à 12n d'une même machine. Chaque circuit intégré de contrôle 11a à 11n est relié au moteur qui lui est associé 12a à 12n par l'intermédiaire de deux voies 13a, d'une manière connue en soi, donnant l'identification de sortie et l'interruption de sécurité. Chaque circuit intégré de contrôle est pourvu en outre, d'une manière connue en soi, de trois sorties 14a à 14n reliées au mini-ordinateur 2, respectivement 2', à savoir une première sortie ayant la fonction : "lire la ligne des données", une deuxième sortie "charger le mot de contrôle" et enfin une troisième sortie "lire les états".

Une ligne commune d'identification 15 est connectée aux lignes d'identification analogues des autres unités d'interface. Cette ligne d'identification a pour but de synchroniser les différents moteurs d'une machine-outil, donc l'unité de contrôle, en fonction, d'une part, de la programmation temps réel, donc de l'état, et, d'autre part, du système d'interruption, afin de scinder logiquement le contrôle d'une part et les valeurs données d'autre part.

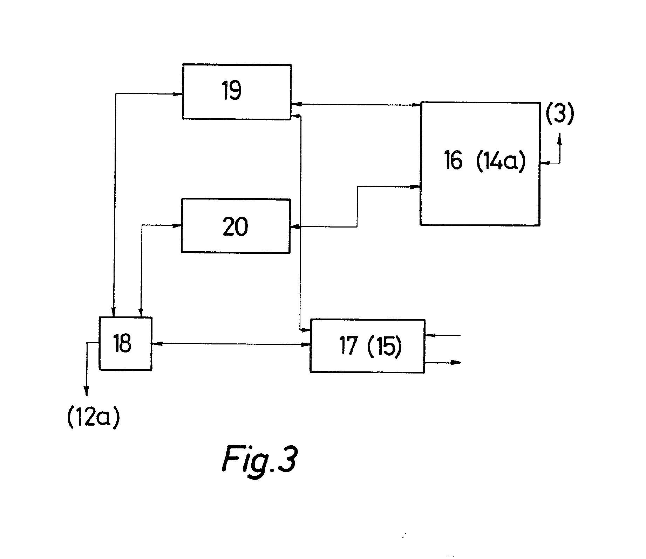

Chaque circuit intégré de contrôle 11 à 11n est réalisé, par exemple, comme représenté schématiquement à la figure 3.

Les sorties 14a, connectées directement aux mini-ordinateurs 2 et 2' constituent en elles-mêmes un micro-ordinateur 16 qui a pour fonction essentielle la lecture des données provenant de la mémoire 3, respectivement 3', du mini-ordinateur 2, respectivement 2', le chargement du mot de contrôle ainsi que des tests et fonctions relatifs à ce mot de contrôle et, enfin, la gestion (lecture, vérification, etc.) des états en relation avec la ligne commune d'identification 15 qui a pour fonction de synchroniser les différentes unités de contrôle en tenant compte de chaque "état" et "contrôle".

Dans le schéma général du circuit, tel que représenté à la figure 3, cette fonction est représentée par la section 17 qui reçoit les signaux de commandes et envoie les états d'interruption sur le bus "entrée/sortie". La liaison avec le moteur considéré 12a, par les voies 13a, se fait par un adaptateur 18 ayant pour fonction l'identification de sortie vers le moteur considéré et l'interruption de sécurité. La transmission des informations s'effectue via un transmetteur 19 et un récepteur 20. Sur le bus "entrée/sortie", par l'entrée s'effectue la lecture des caractères qui sont groupés en un mot de 16 bits et logés en mémoire tandis que sur la sortie s'effectue la lecture des 16 bits en mémoire, divisés en octets et transférés vers le registre des données, ainsi que la surveillance des états sur le canal de sortie.

La transmission et la réception s'effectuent de manière classique au moyen de circuits ET et OU. Elles permettent une fonction totalement parallèle et synchronisée d'une part des commandes et contrôles de chaque machine et, d'autre part, des commandes et contrôles de n machines simultanément. Chaque transmetteur et chaque récepteur est connecté aux adaptateurs de lignes 18a à 18n commandant eux-mêmes n moteurs 12a à 12n de chaque machine. Les données "programme", "état" de chaque programme et de chaque machine, effectués par la ligne commune 15, sont contrôlés par les indicateurs d'états eux-mêmes connectés à deux niveaux d'interruption différents du calculateur, ceci permettant de sauvegarder le fonctionnement parallèle entre transmetteur et récepteur. Chaque récepteur et chaque transmetteur sont en outre également reliés directement et individuellement à la mémoire 3, respectivement 3', du mini-ordinateur 2, respectivement 2', pour la lecture, respectivement l'enregistrement des données.

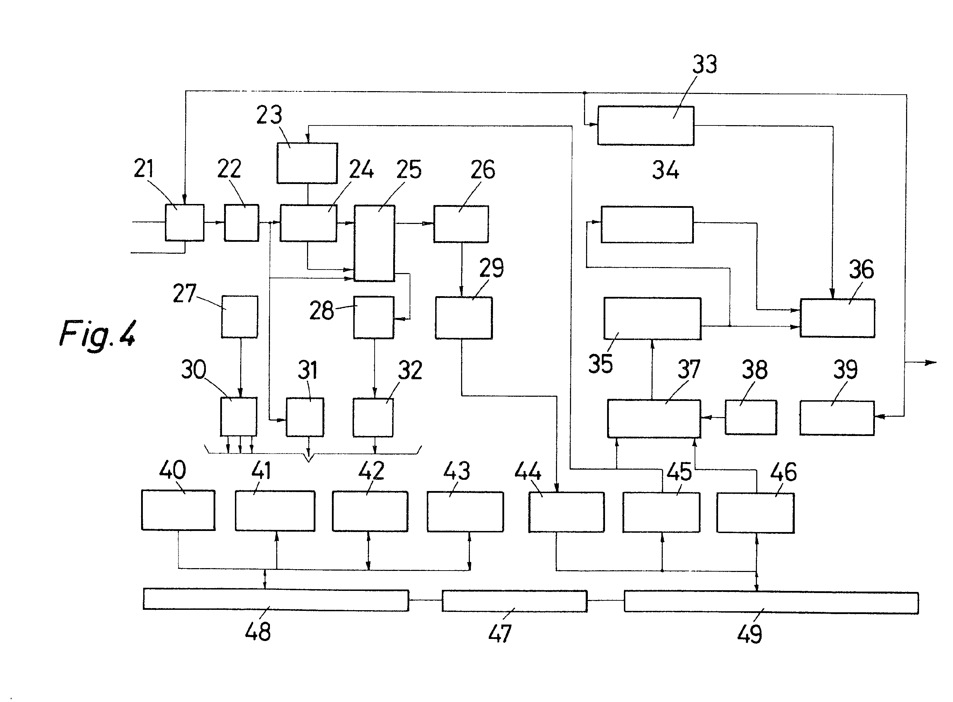

Le micro-ordinateur 16, ou plus exactement la gestion micro-programmée des unités de contrôle 11a à 11n est représentée à la figure 4 qui se compose des circuits suivants :

| | |
|---|---|
| 21 | logique donnée |
| 22 | logique zéro |
| 23 | circuit de synchronisation d'adresses et de comparaison |
| 24 | circuit de retard canonique |
| 25 | sélecteur de donnée |
| 26 | formateur logique |
| 27 | registre de caractères |
| 28 | générateur de caractères |
| 29 | registre de données |
| 30 | détecteur |

31    parité

32    détecteur

33    générateur de parité

34    générateur de caractères

35    générateur de données

36    sélecteur de donnée

37    contrôle de donnée

38    spécification de codes

39    logique zéro

40    registre d'état

41    registre de contrôle

42    sélecteur de longueur de donnée

43    contrôle de l'état des registres

44    mémoire tampon de donnée

45    synchronisateur d'adresses

46    mémoire tampon de donnée

47    décodeur d'adresse

48/49  bus

Le traitement des instructions et donc la commande des machines se font à partir d'une interface 8 parallèlement et simultanément.

L'invention réside particulièrement dans le fait que grâce à l'installation selon l'invention on a pu remplir la condition que la somme des temps nécessaires pour commander chaque machine, comportant chacune huit moteurs est inférieure à la somme des temps nécessaires à l'unité de contrôle centrale pour traiter ces informations.

Ceci a pu être réalisé du fait qu'on a choisi un mini-ordinateur du type mentionné et non des micro-processeurs qui ne répondent pas à ces conditions et en outre qu'on a déchargé ce mini-ordinateur de la fonction du contrôle individuel des moteurs d'une machine par l'introduction sur chaque interface associée à une machine-outil de huit chips de contrôle identiques qui remplissent cette fonction qui consiste principalement d'assurer toutes les comparaisons : 1) comparaison de l'état du moteur par rapport au programme temps réel, 2) comparaison du moteur par rapport à l'état des autres moteurs de la même machine, 3) comparaison du synchronisme par rapport au programme temps réel. Jusqu'à maintenant, dans les commandes numériques des machines conventionnelles, ces trois fonctions étaient réalisées par le calculateur numérique appartenant à chaque machine. Par la présente invention, on a déplacé la réalisation de ces fonctions à la sortie de chaque section du circuit standard interface attribué à chaque moteur d'une machine de manière que ce n'est pas le mini-ordinateur qui doit traiter ces fonctions sous la forme de programmes (software). C'est seulement en évitant à l'ordinateur de devoir traiter ces fonctions que l'on arrive à des temps de travail raisonnables.

En outre, avec l'installation selon l'invention, on utilise un algorithme général de commande des moteurs à courant continu ayant un état à boucle ouverte avec retour d'état alors que dans les machines conventionnelles on utilisait un algorithme à boucle fermée ou semi-fermée. L'algorithme prend en compte la partie comparaison ou le niveau interface. Ceci permet de réaliser des formes géométriques qui étaient impossibles à réaliser avec de telles machines-outils jusqu'à maintenant, par exemple des sphères, des ogives, des cônes, etc. L'algorithme de commande est réparti sur les unités 3 et 4, une partie de cet algorithme étant microprogrammé.

Par ailleurs, le mini-ordinateur est préférablement équipé d'un écran et d'une imprimante permettant également de gérer les planings de fabrication, les stocks, l'approvisionnement et même d'assurer la formation et l'enseignement par simulation, donc sans frais ni risques, mais dans des conditions identiques à la réalité.

De préférence, on utilise des disques souples comme supports de programmes de travail à la place des bandes perforées utilisées jusqu'à maintenant dans les machines conventionnelles. En effet, ces disques peuvent être manipulés plus facilement et la programmation peut également être effectuée plus facilement.

En résumé, grâce à cette invention, on arrive à assurer simultanément la commande, le fonctionnement et la sécurité par une unité de commande principale et ceci pour une pluralité de machines.

L'installation peut en outre servir de simulateur permettant la formation et l'entraînement du personnel devant utiliser le matériel. Par ailleurs, on peut assurer parallèlement la gestion des planings de fabrication, les programmes de gestion, de fabrication et d'approvisionnement. Une seule personne suffit pour exécuter en toute sécurité un nombre donné de programmes de fabrication sur un nombre donné de machines-outils.

Bien entendu, le nombre N de machines-outils et $n$ de moteurs par machines-outil peuvent être choisis arbitrairement, mais à cause de la nature des mini-ordinateurs et des chips d'interface disponibles sur le marché, l'installation selon l'invention est prévue pour une capacité de 64 machines ayant chacune huit moteurs.

Par ailleurs, cette installation offre la possibilité pour des entreprises de commencer leur installation avec n machines et d'augmenter ce nombre de machines

0031618

au fur et à mesure des besoins en se procurant ensuite des nouvelles machines sans automate, donc meilleur marché, qui pourront être reliées à la centrale sans frais annexes. Il est bien évident que plus le nombre de machines centralisées sur le même dispositif de contrôle augmente, plus le rendement de l'installation augmente.

Revendications de brevet

1. Installation comportant N machines-outils commandées numériquement par un calculateur commun à toutes les machines-outils, chaque machine ayant un nombre n de moteurs à contrôler et à commander, l'installation comportant en outre une station d'entrée des données et des programmes, des moyens de contrôle pour commander chaque machine selon un programme indépendant désiré, et N unités interfaces liées par au moins une barre omnibus au calculateur, chaque unité étant attribuée et adaptée à une des machines-outils et comprenant n sections pour le contrôle de chacun des n moteurs d'une machine-outil, caractérisée en ce que ledit calculateur est un mini-ordinateur (2) opérant en temps réel qui forme avec la station d'entrée (1) un seul dispositif centralisé (C) pour commander simultanément toutes les N machines-outils (9A à 9N) et tous les n moteurs (12a à 12n) de chaque machine-outil, ce miniordinateur (2) étant adapté à transmettre toutes les commandes de travail et les signaux de contrôle respectivement d'état, et dans ce but, est équipé d'un système d'interruption ayant un temps de changement de contexte maximum de 900 ns et un temps de cycle qui est seulement une fraction du temps de changement de contexte au maximum les 1/5 et comprend une mémoire centrale (3) comme mémoire de travail, le cas échéant complétée par une mémoire de travail extérieure (5) pour mémoriser tous les programmes de travail à exécuter, en ce que chaque circuit d'interface (10) qui comprend lesdites n sections (10a à 10n) est un circuit à au moins 2n bits, et en ce que pour décharger le mini-ordinateur de la fonction du contrôle individuel des moteurs, il est prévu, connecté à la sortie de chacune desdites sections (10a à 10n) un circuit intégré de contrôle (11a à 11n) attribué et adapté à chaque moteur (12a à 12n) pour toutes les fonctions de comparaison et d'état et piloté directement par ledit mini-ordinateur (2), toutes les lignes d'identification de chacune desdites sections (10a à 10n) étant reliées par une ligne commune d'identification (15).

2. Installation selon la revendication 1, caractérisée en ce que la mémoire de travail extérieure (5) est constituée par des disques souples.

3. Installation selon la revendication 1 ou 2, caractérisée en ce que le circuit d'interface (10) est un circuit d'interface standard à 16 bits en technologie TTL.

4. Installation selon l'une des revendications 1 à 3, caractérisée en ce qu'il est prévu un second mini-ordinateur identique de réserve (2') avec une mémoire centrale (3') et le cas échéant avec une mémoire de travail extérieure (5') de réserve identique à la mémoire du premier mini-ordinateur (2), les premier (2) et second (2') mini-ordinateurs étant reliés par l'intermédiaire d'un commutateur de bus automatique (6) à la barre omnibus (7).

5. Installation selon la revendication 1, caractérisée en ce que la station d'entrée 1 est munie d'un pupitre avec écran et imprimante permettant de traiter d'autres données, notamment d'assurer la gestion.

0031618

Fig.1

Fig.2

Fig.3

0031618

Fig.4